Europäisches Patentamt

(19) European Patent Office

Office européen des brevets

(11) Publication number: **0 169 424**
**B1**

(12) **EUROPEAN PATENT SPECIFICATION**

(45) Date of publication of patent specification: **03.01.90**

(51) Int. Cl.⁵: **G 21 C 7/10**

(21) Application number: **85108364.2**

(22) Date of filing: **05.07.85**

(54) Control rod end plug with a stabilizing configuration.

(30) Priority: **26.07.84 US 634729**

(43) Date of publication of application:
**29.01.86 Bulletin 86/05**

(45) Publication of the grant of the patent:
**03.01.90 Bulletin 90/01**

(84) Designated Contracting States:
**BE DE FR GB IT SE**

(56) References cited:
**DE-C-2 066 109**
**US-A-3 979 258**
**US-A-4 292 132**
**US-A-4 311 560**

(73) Proprietor: **WESTINGHOUSE ELECTRIC CORPORATION**
**Westinghouse Building Gateway Center**
**Pittsburgh Pennsylvania 15222 (US)**

(72) Inventor: **Wilson, John Francis**
**3560 Meadowgate Drive**
**Murrysville Pennsylvania 15668 (US)**
Inventor: **Cerni, Samuel**
**101 Kingsdale Road**
**Pittsburgh Pennsylvania 15221 (US)**
Inventor: **Gjertsen, Robert Kenneth**
**126 Penn Lear Drive**
**Monroeville Pennsylvania 15146 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

This invention relates generally to nuclear reactors and, more particularly, to rod and guide thimble arrangements such as used therein.

In a typical nuclear reactor, the reactor core is composed of a plurality of elongate fuel assemblies each of which contains a plurality of elongate fuel elements or rods. A liquid coolant is pumped upwardly through the core in order to extract heat generated in the core for the production of useful energy. The heat output of the core is usually regulated by the movement of control rods containing neutron absorbing material, such as B₄C, or by the movement of water displacer rods, such as described in U.S. Patent No. 4,432,934. In reactors of the pressurized-water type, each fuel assembly typically includes a plurality of hollow cylindrical guide tubes or thimbles in which the cylindrical control rods or water displacer rods are axially movable. Some of the coolant flow is usually diverted into the lower end of each guide thimble in order to cool the rod therein which ordinarily generates heat in the nuclear transformation associated with its neutron absorbing function.

During operation of the reactor, most of the regulating control rods are substantially withdrawn from the reactor core to an extent placing the tips of their lower end plugs within upper end portions of the associated guide thimbles. While in such a withdrawn position, the control rods may experience considerable vibration induced by the flow of coolant water through the guide thimbles and past the control rod portions bearing the lower end plugs. This vibration of the control rods causes the tips of their lower end plugs to make oscillatory contact with the inner wall surfaces of the guide thimbles, which results in wear and may lead eventually to perforation of the guide thimble walls and a significant weakening of the fuel assembly structure.

Attempts to alleviate this problem have been made, such as set forth in U.S. Patents Nos. 4,292,132 and 4,311,560, both of which aim to eliminate wear on the guide thimble walls by preventing the control rods from making vibratory contact therewith. Thus, US—A—4,292,132 proposes to add on the lower end of the control rod a spring device which provides a uniform, resilient interference fit against the guide thimble wall and thereby prevents the rod tip from impacting it. In accordance with US—A—4,311,560, the control rod has formed at its lower tip a hydraulic bearing adapted to produce forces which counteract any forces tending to drive the control rod tip against the guide thimble wall.

It is the principal object of the invention to provide a simpler and less costly, yet practically fail-proof solution to the above-mentioned problem.

Accordingly, the invention resides in a control rod for use in a nuclear reactor including means for supporting the control rod for axial movement thereof in a guide thimble which is adapted to have reactor coolant flowing therethrough and along the control rod portion disposed therein, said control rod having an end plug at the end thereof which has a substantially conical tip and which is located within the guide thimble when in use, characterized in that said conical tip of the end plug has an asymmetrical configuration causing said reactor coolant, when flowing therepast, to impart to the end plug a lateral force sufficient to urge and hold the end plug steady against the inner wall of said guide thimble.

Thus, unlike the prior art which seeks to prevent vibratory contact of control rods with their guide thimbles by means of devices specially added, the invention proposes to achieve the same desired result merely by changing the shape of the control rod end plug. Underlying this idea is the recognition that one of the causes of coolant flow-induced vibration is vortex shedding around the tip of conventional end plugs which are symmetrical with respect to their central axis or, in other words, to the longitudinal axis of the control rod. By making the end plug tip asymmetrical, the tendency of the control rod to vibrate due to vortex shedding is minimized which, in turn, reduces the lateral force required to hold the rod steady against the guide thimble wall. The asymmetrical configuration of the end plug which reduces vortex shedding also produces said lateral force by rendering the coolant flow velocities around the end plug tip non-symmetrical, the magnitude of the lateral force being a function of the coolant flow rate and the particular shape of the end plug tip.

Preferred embodiments of the invention will now be described, by way of example only, with reference to the accompanying drawings, in which:

Figure 1 is an elevational view of a fuel assembly shown in vertically foreshortened form and with parts broken away for clarity;

Fig. 2 is an enlarged, top plan view of a spider assembly supporting the control rods of the fuel assembly;

Fig. 3 is a sectional view of the spider assembly as taken along line 3—3 of Fig. 2.

Fig. 4 is an enlarged, fragmentary view, taken along line 4—4 of Fig. 3, of an end portion of one of the control rods, including an end plug embodying the invention;

Figs. 4a to 4c are sectional views taken along lines 4a—4a, 4b—4b and 4c—4c, respectively, in Fig. 4;

Fig. 5 is an enlarged, fragmentary view, partly in section, of an upper end portion of one of the guide thimbles and of a lower end portion of a control rod movable therein and moved to its withdrawn position;

Figs. 6 to 8 are views similar to Fig. 4 but illustrating additional embodiments of the invention; and

Figs. 6a to 6c, 7a to 7b, and 8a to 8c are sectional views taken along correespondingly designated lines in Figs. 6 to 8, repsectively.

In the following description, like reference characters designate like or corresponding parts throughout the several views of the drawings, and terms such as "forward", "rearward", "left", "right", "upwardly", "downwardly", and the like, are used as words of convenience not to be construed as limiting terms.

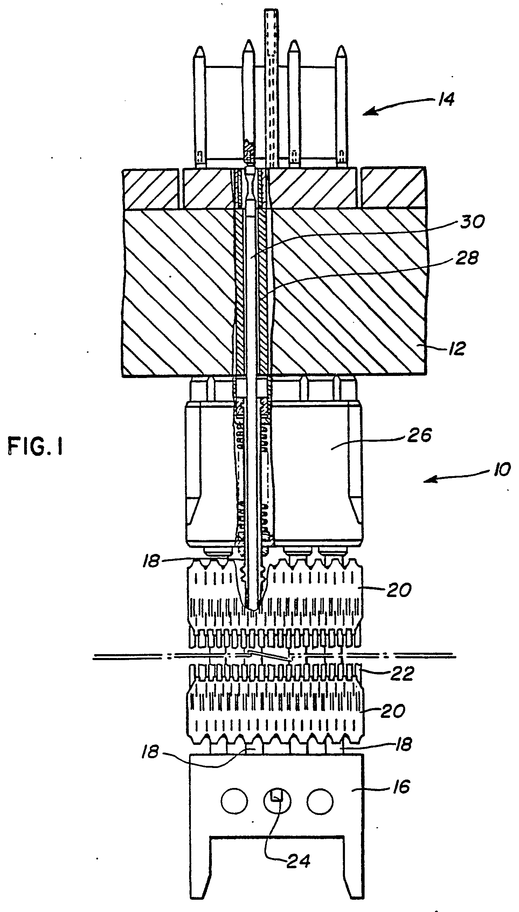

Referring now to the drawings, and particularly to Fig. 1, there is shown an overall combination of a fuel assembly, generally designated with numeral 10, an upper core support plate 12 disposed above and extending across the top of fuel assembly 10, and a spider assembly 14 disposed above the upper core support plate.

The fuel assembly 10 basically comprises a lower end structure or bottom nozzle 16 for supporting the assembly on a lower core plate (not shown) in the core region of a reactor (not shown); a plurality of guide tubes or thimbles 18 longitudinally extending upward from the bottom nozzle 16; a plurality of transverse grids 20 axially spaced along the guide thimbles 18; an organized array of elongate fuel rods 22 transversely spaced and supported by the grids 20; an instrumentation tube 24 in the center of the fuel assembly; and an upper end structure or top nozzle 26 affixed to the upper ends of the guide thimbles 18.

The upper core support 12 extends across all of the fuel assemblies, such as assembly 10, of the reactor core. It has a multiplicity of flow passages, such as flow passage 28, for reactor coolant to flow therethrough, and each guide thimble 18 has one such flow passage 28 in axial alignment therewith to enable a control rod 30 to be inserted.

At their upper ends, the control rods 30 are connected to the spider assembly 14 which supports the rods for axial movement thereof, effected by means of a conventional drive mechanism (not shown), within the guide thimbles 18.

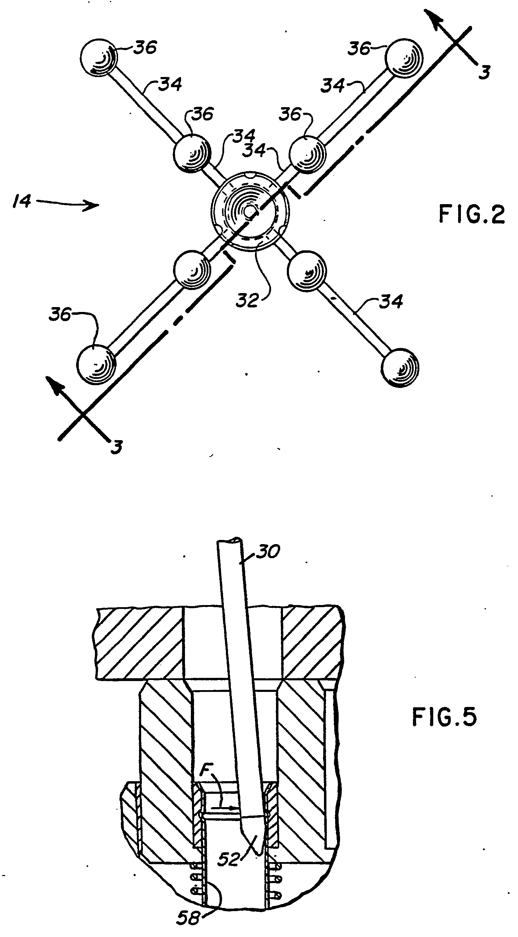

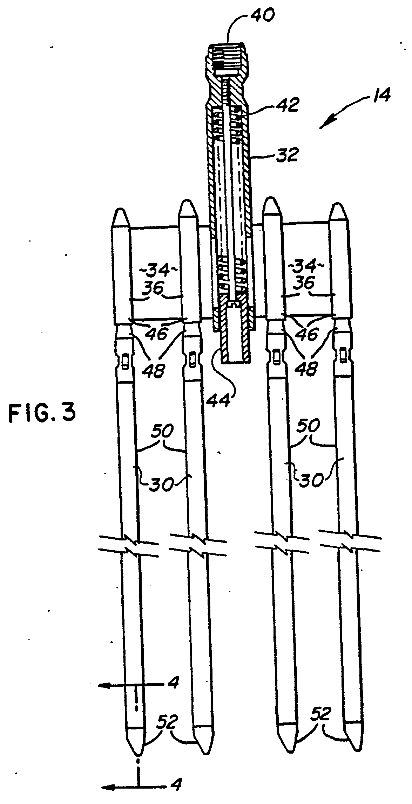

As best seen from Figs. 2 and 3, the spider assembly 14 comprises a central hub 32, a plurality of vanes 34 extending radially outward from the hub 32, and a plurality of fingers 36 on the vanes 34 to which the control rods 30 are connected. Preferably, the hub 32 is in the form of a tube having on its upper end an internally threaded segment 40 for connection to the drive mechanism (not shown) which is operable to raise and lower the spider assembly 14 together with the control rods 30 thereon, as well known in the art. The tubular hub 32 houses a common load absorbing mechanism comprising a coil spring 42 held in a state of compression, and a nipple 44 adapted to be seated in a shallow cavity (not shown) formed in the top of the core plate 12 to assist in assuring proper alignment of the control rods 30 with the core plate passages 28 and the guide thimbles 18. The main purposes of the load absorbing mechanism is to prevent shock loading of the core plate 12 and of the fuel assembly 10 as the spider assembly 14 abuts the top of the core plate 12 upon full insertion of the control rods 30 into the guide thimbles 18.

Each control rod 30 is supported from one of the fingers 36 of the spider assembly 14, each finger 36 having a lower end portion 36 thereof drilled and internally threaded for threadedly receiving an upper end portion 48 of the associated control rod 30. Each control rod 30 includes tubular cladding 50 and an end plug 52 affixed to the lower end of the cladding. In some control rod designs, the rod contains neutron absorbing material, usually in the form of pellets stacked within the cladding 50. Other control rod designs adapt the rods for use as water displacer rods employed for controlling the reactivity of the reactor through displacement of some of the neutron moderating reactor coolant, as described in the above-mentioned US—A—4,432,934.

As mentioned hereinbefore, the power level of a reactor is usually regulated by the insertion and withdrawal of control rods, such as rods 30, into and from the guide thimbles. The control rods are fully inserted during reactor shutdown, and some are withdrawn when the reactor is operating at full power. "Withdrawn" is to be understood in this context as meaning that the control rods 30 are not completely withdrawn from the guide thimbles 18 but still extend into them a short distance, such as 15 cm, for example, as shown in Fig. 5.

When the control rod 30 are fully inserted into the guide thimbles 18 and, thus, within the reactor core (not shown), they are subject to the generation of heat. Therefore, and in order to prevent the pellets therein from melting, provision is made for cooling the control rods. Typically, the lower portions of the guide thimbles are, for this purpose, provided with openings (not shown) enabling some of the pumped coolant entering through the bottom of the fuel assembly 10 to flow into and through the guide thimbles 18 and, in doing so, to cool the control rods 30. When the control rods 30 are in their withdrawn positions, this same upward flow of coolant through the thimbles 18 and past the end portions therein of the withdrawn control rods tends to induce the lower end portions of the control rods to vibrate and thereby pose the wear problem initially mentioned herein.

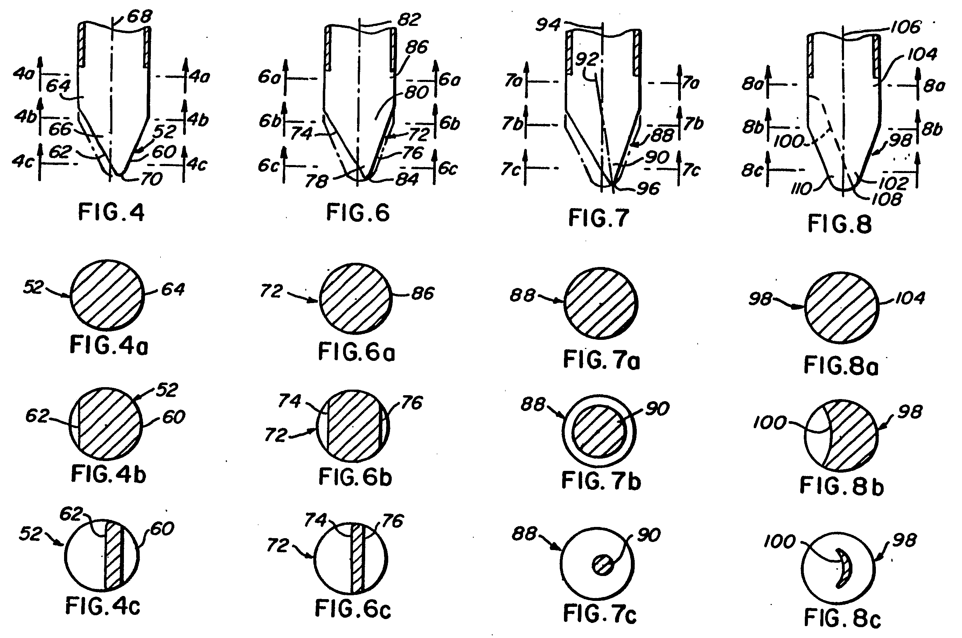

Referring now to Figs. 4 and 6 to 8, the invention proposes to overcome this problem by providing each control rod with a lower end plug shaped in such manner as to cause coolant flowing toward this end plug to flow therepast at non-symmetric velocities and thereby to impart to the end plug a lateral stabilizing force F (Fig. 5), which presses or biases the lower end of the control rod 30 against the inner wall 58 of the thimble 18 as seen in Fig. 5, and thereby prevents the rod 30 from vibrating.

Various asymmetrical end plug designs can be used to produce non-symmetric coolant flow velocities around the tip of the end plug. Thus, and as shown in Figs. 4—4c, an ordinary end plug 52 having the usual conical or tapered outer surface 60 can be rendered suitable for the purposes of the invention by having a flat 62 formed, e.g. machined, on one side of the otherwise axially symmetrical surface 60. The original profile of the surface portion which the flat 62 replaces is shown in broken lines in Fig. 4 from which it is seen that the flat 62 begins at the cylindrical body 64 of the end plug 52 and, extending down the tip 66, crosses the central axis 68 of the end plug 52 to form a terminal end 70 on the opposite side of the axis 68. Figs. 4a to 4c provide comparative cross-sectional views of the end plug 52 which allow one to form a more complete three-dimensional mental image of the stabilizing configuration of the end plug. The end plugs 52 of Figs. 3 and 5 have the stabilizing configuration of Fig. 4.

Fig. 6 illustrates a second asymmetrical design of an end plug 72 wherein a pair of flats 74, 76 are formed on opposite sides of the tapered outer surface 78. Again, the original profile of the lower tip 80 of the plug 72 is indicated in broken lines. The flat 74 on the left is substantially identical to the flat 62 of the design of Fig. 4 in that it crosses the longitudinal axis 82. The flat 76 on the right begins higher on the cylindrical body 86 of the end plug than the flat 74 and thus forms a shallower angle with the axis 82 than does the flat 74.

Fig. 7 represents a third asymmetrical design of an end plug 88 wherein the original symmetrical taper of the plug tip (shown in broken line) has been reduced, such as by machining, to form a tip 90 which has a steeper and more pointed conical configuration and has an axis 92 which is inclined relative to, and which intersects, the central axis 94 of the end plug 88 to form a terminal end 96 offset to one side of the axis 94.

Fig. 8 illustrates a fourth asymmetrical design of an end plug 98 having a concave surface 100 formed on a side of the tapered outer surface 102 of the plug. The concave surface 100 begins in the cylindrical body 104, crosses the central axis 106 of the end plug 98, and forms a lower terminal end 108 on the tip 110 at the opposite side of the axis 106.

A feature common to all of the asymmetrical tip designs shown in Figs. 4 and 6 to 8 is that the terminal tip ends 70, 84, 96 and 108, respectively, all are offset to one side of the central axes 68, 82, 94 and 106 of the respective end plugs 52, 72, 88 and 98. This ensures non-symmetric coolant-flow velocity patterns imparting to the respective end plugs lateral forces acting in the direction in which the tip ends are offset from said central axes. Moreover, each of the asymmetrical end plug shapes reduces the possibility of flow-induced vibration caused by vortex shedding such as experienced with symmetrical end plug designs. Thus, although some of the asymmetrical end plug stabilizing configurations shown herein may be preferred to others from a manufacturing standpoint, they all perform the same useful functions in an advantageous manner.

## Claims

1. A control rod (30) for use in a nuclear reactor including means (14) for supporting the control rod for axial movement thereof in a guide thimble (18) which is adapted to have reactor coolant flowing therethrough and along the control rod portion disposed therein, said control rod having an end plug (52; 72; 88; 98) at the end thereof which has a substantially conical tip (66; 80; 90; 110) and which is located within the guide thimble when in use, characterized in that said conical tip of the end plug has an asymmetrical configuration causing said reactor coolant, when flowing therepast, to impart to the end plug a lateral force sufficient to urge and hold the end plug steady against the inner wall of said guide thimble.

2. A control rod according to Claim 1, characterized in that the terminal end (70; 84; 96; 108) of the tip is laterally offset from the central axis of the end plug so as to produce a non-symmetric coolant flow velocity pattern about said end plug when coolant flows therepast.

3. A control rod according to Claim 1 or 2, characterized in that the tip (90) of the end plug (94) has a symmetry axis (92) which is inclined with respect to and intersects the longitudinal central axis (94) of the end plug.

4. A control rod according to Claim 1 or 2, characterized in that the tip (66) of the end plug (52) has formed on its outer surface a flat (62) which begins at a location spaced from the terminal end (70) of the tip end to one side of the central axis (68) of the end plug, and extends, intersecting said central axis to said terminal end (70) located at the opposite side of said central axis.

5. A control rod according to Claim 1 or 2, characterized in that the tip (80) of the end plug (72) has two flats (74, 76) formed on opposite sides thereof, one (74) of said flats intersecting the central axis (82) of the end plug and meeting the other flat (76) at the terminal end (84) of the tip at the opposite side of said central axis.

6. A control rod according to Claim 1 or 2, characterized in that the tip (110) of the end plug (98) has a concave surface portion (100) which begins at a location spaced from the terminal end (108) of the tip end to one side of the central axis (106) of the end plug, and extends intersecting said central axis, to said terminal end (108) located at the opposite side of said central axis.

## Patentansprüche

1. Steuerstab (30) zum Einsatz in einem Kernreaktor, der Mittel (14) zur axial beweglichen Halterung des Steuerstabs in einem Führungsrohr (18) aufweist, das so ausgebildet ist, daß Reaktionskühlmittel hindurch und entlang des darin befindlichen Steuerstabteils strömt, wobei der Steuerstab an seinem Ende eine Endkappe (52; 72; 88; 98) mit im wesentlichen konischer Spitze (66; 80; 90; 110) aufweist, die im Einsatz innerhalb des Führungsrohrs gelegen ist, dadurch gekennzeichnet, daß die konische Spitze der Endkàppe eine asymmetrische Konfiguration aufweist, die bedingt, daß vorbeiströmendes Reaktorkühlmittel der Endkappe eine ausreichend große Querkraft mitteilt, daß die Endkappe gegen die Innenwandung des Führungsrohrs gedrängt und dort stabil gehalten wird.

2. Steuerstab nach Anspruch 1, dadurch gekennzeichnet, daß das vordere Ende (70; 84; 96; 108) der Spitze seitlich gegen die Mittelachse der Spitze versetzt ist, so daß bei vorbeiströmendem Kühlmittel ein nicht symmetrisches Kühlmittelströmungsprofil entsteht.

3. Steuerstab nach Anspruch 1 oder 2, dadurch gekennzeichnet, daß die Spitze (90) der Endkappe (88) eine Symmetrieachse (92) aufweist, die mit Bezug auf die Längsmittelachse (94) der Endkappe geneigt ist und diese schneidet.

4. Steuerstab nach Anspruch 1 oder 2, dadurch gekennzeichnet, daß die Spitze (66) der Endkappe (52) eine an ihrer Außenfläche gebildete Abflachung (62) aufweist, die, beginnend an einer vom vorderen Ende (70) der Spitze entfernten Stelle auf einer Seite der Mittelachse (68) der Endkappe, die Mittelachse schneidend bis zu dem auf der anderen Seite der Mittelachse liegenden vorderen Ende (70) verläuft.

5. Steuerstab nach Anspruch 1 oder 2, dadurch gekennzeichnet, daß die Spitze (80) der Endkappe (72) zwei Abflachungen (74, 76), aufweist, die auf entgegengesetzten Seiten gebildet sind, wobei eine (74) dieser Abflachungen die Mittelachse (82) der Endkappe schneidet und am vorderen Ende (84) der Spitze auf der anderen. Seite der Mittelachse mit der anderen Abflachung (76) zusammenläuft.

6. Steuerstab nach Anspruch 1 oder 2, dadurch gekennzeichnet, daß die Spitze (110) der Endkappe (98) einen konkaven Oberflächenbereich (100) aufweist, der an einer von ihrem vorderen Ende (108) entfernten Stelle der Spitze auf einer Seite der Mittelachse (106) der Endkappe beginnt und die Mittelachse schneidend zum vorderen Ende (108) verläuft, das auf der anderen Seite der Mittelachse liegt.

**Revendications**

1. Barre de commande (30) pour l'utilisation dans un réacteur nucléaire comportant des moyens (14) pour supporter la barre de commande pour le déplacement axial de celle-ci dans un tube-guide (18) qui est adapté pour qu'un caloporteur de réacteur circule à travers celui-ci et le long de la partie de barre de commande disposée à l'intérieur de ce tube-guide, ladite barre de commande ayant à son extrémité un bouchon d'extrémité (52, 72, 88, 98), qui a une pointe (66; 80; 90; 110) substantiellement conique et qui est localisé à l'intérieur du tube-guide lorsqu'il est en utilisation, caractérisée en ce que ladite pointe conique du bouchon d'extrémité a une configuration asymétrique faisant que ledit caloporteur de réacteur lorsqu'il circule le long du bouchon d'extrémité, applique à ce dernier une force latérale, suffisante pour pousser et maintenir le bouchon d'extrémité bien en place contre la paroi intérieure dudit tube-guide.

2. Barre de commande selon la revendication 1, caractérisée en ce que l'extrémité terminale (70; 84; 96; 108) de la pointe est latéralement décalée par rapport à l'axe central du bouchon d'extrémité de façon à produire une configuration de vitesse d'écoulement du caloporteur non symétrique autour dudit bouchon d'extrémité lorsque le caloporteur circule le long de celui-ci.

3. Barre de commande selon la revendication 1 ou 2, caractérisée en ce que la pointe (90) du bouchon d'extrémité (94) a un axe de symétrie (92) qui est incliné par rapport à l'axe longitudinal central (94) du bouchon d'extrémité et qui coupe celui-ci.

4. Barre de commande selon la revendication 1 ou 2, caractérisée en ce que la pointe (66) du bouchon d'extrémité (52) possède, formé sur sa surface extérieure, un méplat (62) qui commence en un emplacement espacé de l'extrémité terminale (70) de l'extrémité de la pointe, sur un côté de l'axe central (68) du bouchon d'extrémité, et qui s'étend, en coupant ledit axe central, jusqu'à ladite extrémité terminale (70) située du côté opposé audit axe central.

5. Barre de commande selon la revendication 1 ou 2, caractérisée en ce que la pointe (80) du bouchon d'extrémité (72) possède deux méplats (74, 76) formés sur des côtés opposés de celle-ci, l'un (74) desdits méplats coupant l'axe central (82) du bouchon d'extrémité et rencontrant l'autre méplat (76) à l'extrémité terminale (84) de la pointe du côté opposé dudit axe central.

6. Barre de commande selon la revendication 1 ou 2, caractérisée en ce que la pointe (110) du bouchon d'extrémité (98) a une partie de surface concave (100) qui commence en un emplacement espacé de l'extrémité terminale (108) de l'extrémité de la pointe, sur un côté de l'axe central (106) du bouchon d'extrémité, et qui s'étend, en coupant ledit axe central, jusqu'à ladite extrémité terminale (108) située du côté opposé audit axe central.

FIG. I

FIG.2

14 →

32

34

36

3

FIG.5

30

F

52

58

FIG. 3

FIG.8

FIG.8a

FIG.8b

FIG.8c

FIG.7

FIG.7a

FIG.7b

FIG.7c

FIG.6

FIG.6a

FIG.6b

FIG.6c

FIG.4

FIG.4a

FIG.4b

FIG.4c